# EUROPEAN PATENT APPLICATION

(11) **EP 4 618 476 A1**
(43) Date of publication of application: **17.09.2025**
(21) Application number: 24798711.8
(22) Date of filing: 08.08.2024
(51) Int. Cl.: H04L 9/40

(54) **AUDIO PROVIDING SYSTEM AND AUTHENTICATION METHOD THEREOF**

(30) Priority: 30.01.2024 KR 20240014122
(71) Applicant: Kokozi Co. Ltd, Gangnam-gu, Seoul 06194 (KR)
(72) Inventor: PARK, Jihee, Seoul 06583 (KR); CHOI, Kiun, Seoul 03505 (KR)
(74) Representative: Zacco Sweden AB
(86) International application number: PCT/KR2024/011827
(87) International publication number: WO 2025/164864

(57) **Abstract**

An authorization method performed by an audio providing system including an audio output device, a content server that provides sound content to the audio output device, and an authorization server that performs authorization for the audio output device, the authorization method comprising the steps of: transferring, by the audio output device, a production credential for a batch of the audio output device to the authorization server; generating, by the authorization server, a runtime credential corresponding to the audio output device; providing, by the authorization server, the runtime credential to the audio output device; transferring, by the authorization server, information about the runtime credential to the content server; registering, by the content server, the runtime credential that is provided from the authorization server; transferring, by the audio output device, a content request signal for the sound content to the content server; and determining, by the content server, whether to provide the sound content to the audio output device by using the content request signal and the registered runtime credential.

## Description

### TECHNICAL FIELD

The disclosure relates to an audio providing system and an authorization method thereof.

### BACKGROUND

Nowadays, various services using an electronic device are being provided to consumers. The services using an electronic device have the advantage of being updateable through the use of a communication network even without replacing the device, and thus have been widely used. However, cases of unauthorized uses of paid services through illegal copying of such electronic devices are also increasing.

In order to prevent such unauthorized used, genuine authentication using a serial number per device or a production credential per batch may also be performed. However, in case that the serial number or the production credential leaks, there is a problem in that a third party may illegally copy the electronic device until the genuine authentication for leaked information is revoked. Further, in case that the genuine authentication for the leaked information is collectively revoked, problems in that the authorization is revoked even for normally produced and distributed products may arise.

Accordingly, there has been a need for a method capable of selectively dealing with illegally copied products.

### Prior Art Literature

### Patent Documents

Korean Patent Application Publication No. 10-2017-0131867

### BRIEF SUMMARY

An object of the present disclosure is to provide an audio providing system and an authorization method thereof, which can check whether a product is replicated and can provide a corresponding service.

The objects of the present disclosure are not limited to the objects mentioned above, and other objects and advantages of the present disclosure that have not been mentioned can be understood by the following description and will be more clearly understood by the embodiments of the present disclosure. Further, it will be readily appreciated that the objects and advantages of the present disclosure may be realized by the means set forth in the claims and combinations thereof.

According to some aspects of the disclosure, an authorization method performed by an audio providing system including an audio output device, a content server that provides sound content to the audio output device, and an authorization server that performs authorization for the audio output device, the authorization method comprising the steps of: transferring, by the audio output device, a production credential for a batch of the audio output device to the authorization server; generating, by the authorization server, a runtime credential corresponding to the audio output device, providing, by the authorization server, the runtime credential to the audio output device, transferring, by the authorization server, information about the runtime credential to the content server, registering, by the content server, the runtime credential that is provided from the authorization server; transferring, by the audio output device, a content request signal for the sound content to the content server, and determining, by the content server, whether to provide the sound content to the audio output device by using the content request signal and the registered runtime credential.

According to some aspects, the step of generating the runtime credential comprises the steps of: performing the authorization for the audio output device by using the production credential; and generating the runtime credential corresponding to the audio output device.

According to some aspects, the content request signal comprises the runtime credential.

According to some aspects, the step of determining whether to provide the sound content comprises the steps of: determining whether the registered runtime credential is identical to the runtime credential included in the content request signal; and providing the sound content to the audio output device in case that the registered runtime credential is identical to the runtime credential included in the content request signal.

According to some aspects, the step of determining whether to provide the sound content further comprises the step of not providing the sound content to the audio output device in case that the registered runtime credential is not identical to the runtime credential included in the content request signal.

According to some aspects, further comprising the steps of: revoking, by the authorization server, authorization for the runtime credential; transferring, by the authorization server, information about the revoked runtime credential to the content server; and registering, by the content server, the revocation of the runtime credential that is provided from the authorization server.

According to some aspects, the step of determining whether to provide the sound content comprises the steps of: determining whether the revocation of the runtime credential included in the content request signal has been registered; and not providing the sound content to the audio output device in case that the revocation of the runtime credential included in the content request signal has been registered.

According to some aspects, the step of determining whether to provide the sound content further comprises the step of: providing the sound content to the audio output device in case that the revocation of the runtime credential included in the content request signal has not been registered.

According to some aspects of the disclosure, an authorization method performed by an audio providing system including a first audio output device, a second audio output device, a content server that provides sound content to the first and second audio output devices, and an authorization server that performs authorization for the first and second audio output devices, the authorization method comprising the steps of: transferring, by the first audio output device, a first production credential for a batch of the first audio output device to the authorization server, transferring, by the second audio output device, a first production credential for a batch of the second audio output device to the authorization server, generating, by the authorization server, a first runtime credential corresponding to the first audio output device, generating, by the authorization server, a second runtime credential corresponding to the second audio output device and being different from the first runtime credential, determining, by the content server, whether to provide the sound content to the first audio output device in accordance with a state of the first runtime credential, and determining, by the content server, whether to provide the sound content to the second audio output device in accordance with a state of the second runtime credential.

According to some aspects, the step of generating the first runtime credential comprises: generating the first runtime credential corresponding to the first audio output device; providing the first runtime credential to the first audio output device; and transferring and registering information about the first runtime credential onto the content server.

According to some aspects, the step of determining whether to provide the sound content to the first audio output device comprises the steps of: receiving a content request signal for the sound content from the first audio output device; determining whether the registered first runtime credential is identical to the first runtime credential included in the content request signal; and providing the sound content to the first audio output device in case that the registered first runtime credential is identical to the first runtime credential included in the content request signal.

According to some aspects, further comprising the steps of: revoking, by the authorization server, authorization for the first runtime credential; transferring, by the authorization server, information about the revoked first runtime credential to the content server; and registering, by the content server, the revocation of the first runtime credential that is provided from the authorization server.

According to some aspects, the step of determining whether to provide the sound content to the first audio output device comprises: receiving a content request signal for the sound content from the first audio output device; determining whether the revocation of the first runtime credential has been registered; and not providing the sound content to the first audio output device in case that the revocation of the first runtime credential included has been registered.

According to some aspects of the disclosure, an audio providing system comprises:
an audio output device including a production credential for a batch; a content server configured to provide sound content to the audio output device; and an authorization server configured to perform authorization for the audio output device, wherein the authorization server is configured to: receive the production credential from the audio output device and generating a runtime credential corresponding to the audio output device, provide the runtime credential to the audio output device, and transfer information about the runtime credential to the content server, and
wherein the content server is configured to: register the runtime credential that is provided from the authorization server, receive a content request signal for the sound content from the audio output device, and determine whether to provide the sound content to the audio output device by using the content request signal and the runtime credential.

According to some aspects, the determining of whether to provide the sound content comprises: determining whether the registered runtime credential is identical to the runtime credential included in the content request signal; and providing the sound content to the audio output device in case that the registered runtime credential is identical to the runtime credential included in the content request signal.

According to some aspects, the authentication server is configured to: revoke authorization for the runtime credential, further transfer information about the revoked runtime credential to the content server, and further register the revocation of the runtime credential that is provided from the authorization server.

According to some aspects, the determining of whether to provide the sound content comprises: determining whether the revocation of the runtime credential included in the content request signal has been registered; and not providing the sound content to the audio output device in case that the revocation of the runtime credential included in the content request signal has been registered.

Aspects of the disclosure are not limited to those mentioned above and other objects and advantages of the disclosure that have not been mentioned can be understood by the following description and will be more clearly understood according to embodiments of the disclosure. In addition, it will be readily understood that the objects and advantages of the disclosure can be realized by the means and combinations thereof set forth in the claims.

The audio providing system and the authorization method thereof can allocate a runtime credential which is different from a production credential that is given to an audio output device in a production process and which is unique for each audio output device. Through this, in case that a replica is made in the same batch, the use of the replica can be prevented by selectively revoking only the authorization for the replicated device.

In addition to what is described above, specific effects of the present disclosure will be described together while illustrating the following specific details for carrying out the present disclosure.

### BRIEF DESCRIPTION OF THE DRAWINGS

FIG. 1 is a conceptual diagram explaining an audio providing system according to some embodiments of the present disclosure.
FIG. 2 is a flowchart explaining an authorization method that is performed by the audio providing system of FIG. 1.
FIG. 3 is a flowchart explaining steps S45 and S50 of FIG. 2 in detail.
FIG. 4 is a flowchart explaining an authorization method that is performed by the audio providing system of FIG. 1.
FIG. 5 is a flowchart explaining steps S85 and S90 of FIG. 4 in detail.
FIG. 6 is a diagram exemplarily explaining the runtime credential of FIG. 1.
FIG. 7 is a flowchart explaining an authorization method that is performed by an audio providing system according to some embodiments of the present disclosure.
FIG. 8 is a diagram explaining hardware constitutions of an audio providing system, an audio output device, an authorization server, or a content server according to some embodiments of the present disclosure.

### DETAILED DESCRIPTION OF THE PREFERRED EMBODIMENTS

The terms or words used in the disclosure and the claims should not be construed as limited to their ordinary or lexical meanings. They should be construed as the meaning and concept in line with the technical idea of the disclosure based on the principle that the inventor can define the concept of terms or words in order to describe his/her own inventive concept in the best possible way. Further, since the embodiment described herein and the configurations illustrated in the drawings are merely one embodiment in which the disclosure is realized and do not represent all the technical ideas of the disclosure, it should be understood that there may be various equivalents, variations, and applicable examples that can replace them at the time of filing this application.

Although terms such as first, second, A, B, etc. used in the description and the claims may be used to describe various components, the components should not be limited by these terms. These terms are only used to differentiate one component from another. For example, a first component may be referred to as a second component, and similarly, a second component may be referred to as a first component, without departing from the scope of the disclosure. The term 'and/or' includes a combination of a plurality of related listed items or any item of the plurality of related listed items.

The terms used in the description and the claims are merely used to describe particular embodiments and are not intended to limit the disclosure. Singular forms are intended to include plural forms unless the context clearly indicates otherwise. In the application, terms such as "comprise," "comprise," "have," etc. should be understood as not precluding the possibility of existence or addition of features, numbers, steps, operations, components, parts, or combinations thereof described herein.

Unless otherwise defined, the phrases "A, B, or C," "at least one of A, B, or C," or "at least one of A, B, and C" may refer to only A, only B, only C, both A and B, both A and C, both B and C, all of A, B, and C, or any combination thereof.

Unless being defined otherwise, all terms used herein, including technical or scientific terms, have the same meaning as commonly understood by those skilled in the art to which the disclosure pertains.

Terms such as those defined in commonly used dictionaries should be construed as having a meaning consistent with the meaning in the context of the relevant art, and are not to be construed in an ideal or excessively formal sense unless explicitly defined in the application. In addition, each configuration, procedure, process, method, or the like included in each embodiment of the disclosure may be shared to the extent that they are not technically contradictory to each other.

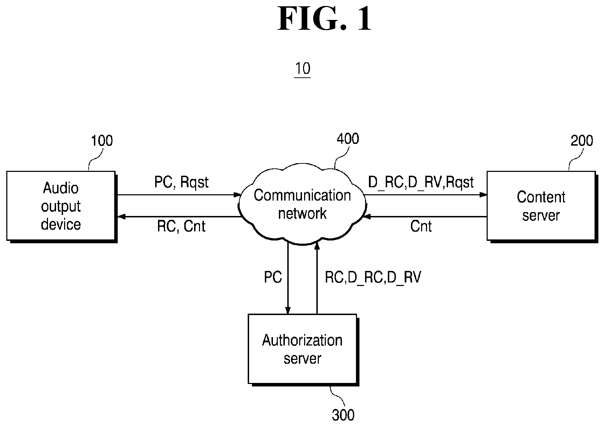

Hereinafter, with reference to FIGS. 1 to 8, an audio providing system and an authorization method thereof according to some embodiments of the present disclosure will be described.

FIG. 1 is a conceptual diagram explaining an audio providing system according to some embodiments of the present disclosure.

Referring to FIG. 1, an audio providing system according to some embodiments of the present disclosure includes an audio output device 100, a content server 200, an authorization server 300, and a communication network. Here, the audio output device 100 may operate in association with the content server 200 and the authorization server 300 through the communication network 400, and may transmit and receive data.

The audio output device 100 may be constituted to output sound content Cnt for auditory stimulation of infants and young children. The audio output device 100 may transfer a content request signal Rqst for the sound content to the content server 200. Then, the audio output device 100 may be provided with the sound content Cnt from the content server 200, and may output the provided sound content Cnt.

The audio output device 100 may transfer a production credential PC for a batch to the authorization server 300. Exemplarily, the production credential PC may be data for the batch of the audio output device 100, and may include information about at least one of a manufacturing plant, a manufacturing line, and a date of manufacturing. Accordingly, a plurality of audio output devices 100 may have the same production credential PC in the same batch.

Further, the audio output device 100 may receive a runtime credential RC from the authorization server 300. Here, the runtime credential RC is data that corresponds to the audio output device 100, and may be allocated to the audio output device 100 of which the authorization is completed by the authorization server 300. The plurality of audio output devices 100 may be allocated with different runtime credentials RC in the same batch.

The authorization server 300 may receive the production credential PC from the audio output device 100, and may generate the runtime credential RC. The authorization server 300 may transfer information D_RC about the runtime credential RC to the content server 200.

Further, in case that replication of the audio output device 100 is suspected, the authorization server 300 may revoke the authorization for the runtime credential RC. The authorization server 300 may transfer information D_RV about the revoked runtime credential to the content server 200.

In case of receiving the content request signal Rqst, the content server 200 may determine whether to provide the sound content Cnt based on at least one of the information D_RC and the information D_RV. Depending on whether to provide the sound content Cnt, the content server 200 may or may not provide the sound content Cnt to the audio output device 100.

Meanwhile, the communication network 400 may serve as a connection among the audio output device 100, the content server 200, and the authorization server 300. That is, the communication network 400 means a communication network that provides an access path so that the audio output device 100 can transmit and receive data therethrough after accessing the content server 200 or the authorization server 300. The communication network 400 may include, for example, wired networks, such as local area networks (LANs), wide area networks (WANs), metropolitan area networks (MANs), and integrated service digital networks (ISDNs), or wireless networks, such as wireless LANs, CDMA, Bluetooth, and satellite communications, but the scope of the present disclosure is not limited thereto.

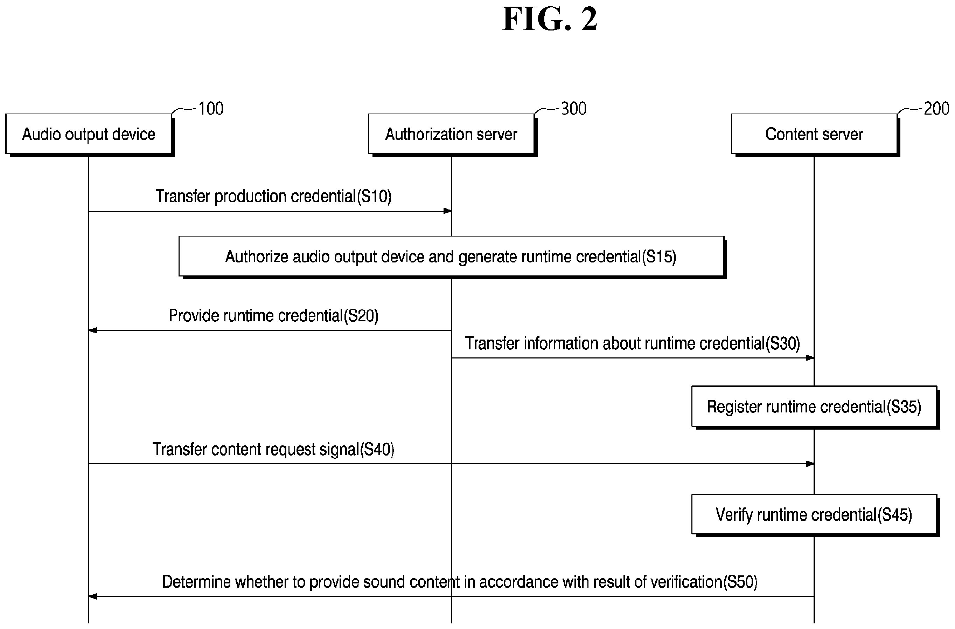

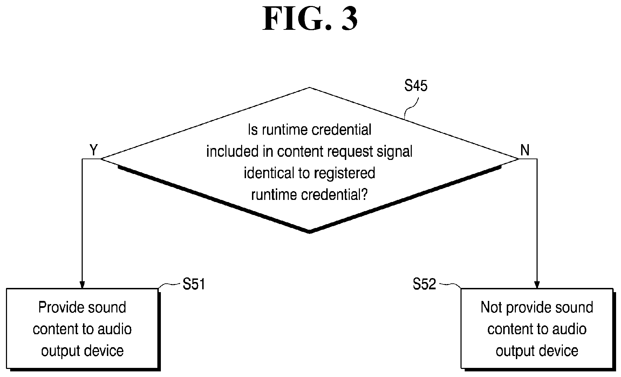

FIG. 2 is a flowchart explaining an authorization method that is performed by the audio providing system of FIG. 1, and FIG. 3 is a flowchart explaining steps S45 and S50 of FIG. 2 in detail. Overlapping parts with the above-described contents will be omitted or simplified.

Referring to FIG. 2, the audio output device 100 transfers the production credential to the authorization server 300 (S10). Then, the authorization server 300 authorizes the audio output device 100, and generates the runtime credential (S15).

The audio output device 100 may transfer the production credential PC to the authorization server 300. The authorization server 300 may perform authorization for the audio output device 100 by using the production credential PC. Here, the authorization may be authorization on whether the audio output device 100 is a normally produced product. In case that the authorization is completed, the authorization server 300 may generate the runtime credential RC corresponding to the audio output device 100. In this case, the production credential PC may correspond to the batch of the audio output device 100, and the runtime credential RC may correspond to each audio output device. In other words, the plurality of audio output devices 100 may have the same production credential PC and different runtime credentials RC.

Then, the authorization server 300 provides the runtime credential to the audio output device 100 (S20). Further, the authorization server 300 transfers information about the runtime credential to the content server 200 (S30).

The authorization server 300 may provide the generated runtime credential RC to the audio output device 100. Further, the authorization server 300 may transfer the information D_RC about the runtime credential RC to the content server 200.

Then, the content server 200 registers the runtime credential therein (S35).

The content server 200 may register the runtime credential RC that is provided from the authorization server 300 therein. Thereafter, the content server 200 may use the registered runtime credential RC for verification.

Meanwhile, the audio output device 100 transfers the content request signal to the content server 200.

The audio output device 100 may transfer the content request signal Rqst for the sound content Cnt to the content server 200. In this case, the content request signal Rqst may include the runtime credential RC that the audio output device 100 is provided with.

Then, the content server 200 verifies the runtime credential (S45). Then, the content server 200 determines whether to provide the sound content in accordance with the result of the verification (S50).

Specifically, referring further to FIG. 3, the content server 200 determines whether the runtime credential included in the content request signal is identical to the registered runtime credential (S45). If the runtime credential included in the content request signal is identical to the registered runtime credential, the content server 200 provides the sound content to the audio output device 100 (S51). On the contrary, if the runtime credential included in the content request signal is not identical to the registered runtime credential, the content server 200 does not provide the sound content to the audio output device 100 (S52).

If the runtime credential RC included in the content request signal Rqst is different from the registered runtime credential RC, the content server 200 may determine that the audio output device 100 has an invalid runtime credential RC. In this case, the invalid runtime credential RC may be a runtime credential RC that is not registered in the content server 200. Exemplarily, the invalid runtime credential RC may be a runtime credential that is created by imitation by a third party. Accordingly, the content server 200 may not provide the sound content Cnt to the audio output device 100 having the invalid runtime credential RC.

In the drawing, it is illustrated that the step S30 is performed after the step S20, but the present embodiment is not limited thereto. The step S20 may be performed after the step S30, or two steps may be performed at the same time.

Further, although not illustrated in the drawing, the steps S40 to S50 may be repeatedly performed. For example, if it is intended to update the sound content on the audio output device 100 to follow the steps S10 to S50, the steps S40 to S50 may be carried out immediately.

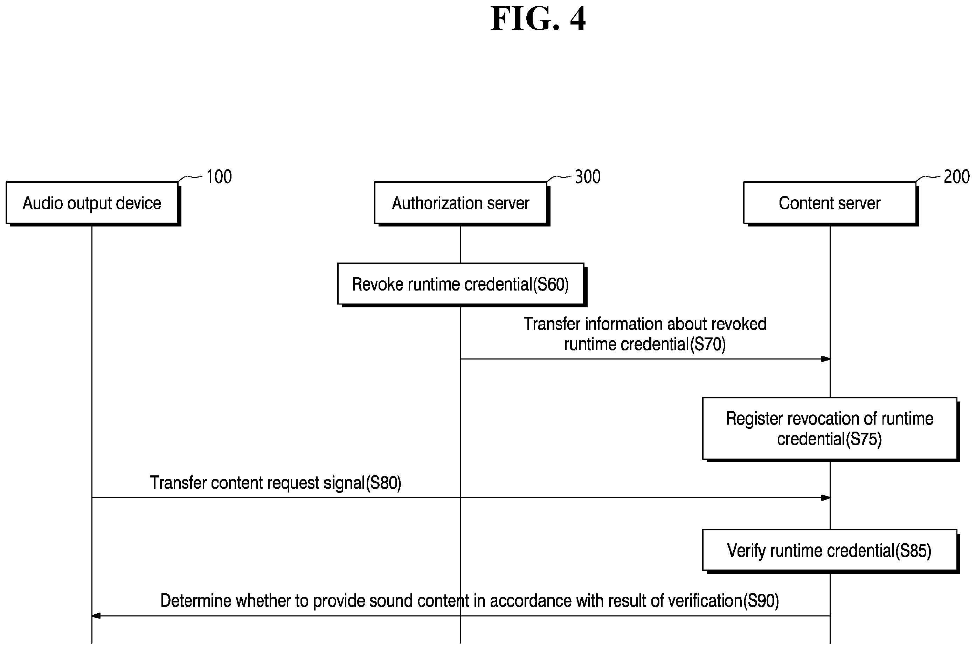

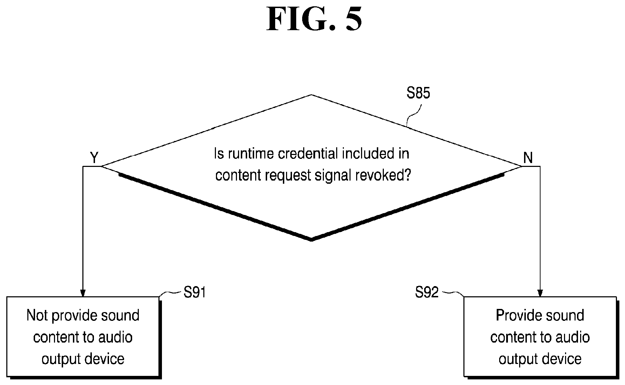

FIG. 4 is a flowchart explaining an authorization method that is performed by the audio providing system of FIG. 1, and FIG. 5 is a flowchart explaining steps S85 and S90 of FIG. 4 in detail. Overlapping parts with the above-described contents will be omitted or simplified.

Referring to FIG. 4, the authorization server 300 revokes the authorization for the runtime credential (S60). Then, the authorization server 300 transfers information about the revoked runtime credential to the content server 200 (S70).

In case that the illegal copying or problem is suspected, the authorization server 300 may revoke the authorization for the runtime credential RC. The authorization server 300 may transfer the information D_RV about the revoked runtime credential to the content server 200.

Then, the content server 200 registers the revocation of the runtime credential (S75).

The content server 200 may receive the information D_RV about the revoked runtime credential, and may register the revocation of the runtime credential RC based on the received information. For example, the content server 200 may change the state of the runtime credential RC registered in the content server 200 to "revoked".

Meanwhile, the audio output device 100 transfers the content request signal to the content server 200 (S80).

The audio output device 100 may transfer the content request signal Rqst for the sound content Cnt to the content server 200. In this case, the content request signal Rqst may include the runtime credential RC allocated to the audio output device 100.

Then, the content server 200 verifies the runtime credential (S85). Then, the content server 200 determines whether to provide the sound content to the audio output device 100 in accordance with the result of the verification (S90).

Specifically, referring further to FIG. 5, the content server 200 determines whether the revocation of the runtime credential included in the content request signal has been registered (S85). If the revocation of the runtime credential included in the content request signal has been registered, the content server 200 does not provide the sound content to the audio output device 100 (S91). On the contrary, if the revocation of the runtime credential included in the content request signal has not been registered, the content server 200 provides the sound content to the audio output device 100 (S92).

If the runtime credential RC included in the content request signal Rqst is the runtime credential RC of which the revocation has been registered, the content server 200 may determine that the audio output device 100 has been illegally copied. Accordingly, the content server 200 may not provide the sound content Cnt to the audio output device 100 that corresponds to the runtime credential RC of which the revocation has been registered.

On the contrary, if the runtime credential RC included in the content request signal Rqst is the runtime credential RC of which the revocation has not been registered, the content server 200 may determine that the audio output device 100 is normal. Accordingly, the content server 200 may provide the sound content Cnt to the audio output device that corresponds to the runtime credential RC of which the revocation has not been registered.

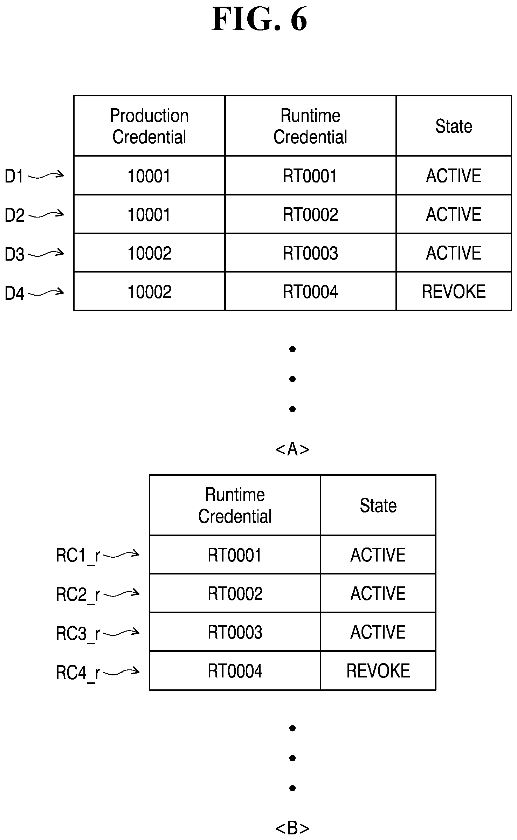

FIG. 6 is a diagram exemplarily explaining the runtime credential of FIG. 1.

Specifically, <A> of FIG. 6 is a diagram explaining runtime credentials that are managed by the authentication server 300. Each row may correspond to one audio output device 100.

Referring to <A> of FIG. 6, production credentials of first data D1 and second data D2 may be equal to "10001". On the contrary, the runtime credential of the first data D1 may be "RT0001", and the runtime credential of the second data D2 may be "RT0002", which may be different from each other. The runtime credentials of the first and second data D1 and D2 may be in an ACTIVE state where the authorization thereof has not been revoked.

Meanwhile, the production credentials of third data D3 and fourth data D4 may be equal to "10002". The production credentials of the third and fourth data D3 and D4 may be different from those of the first and second data D1 and D2. Accordingly, the third and fourth data D3 and D4 may correspond to a device that is produced in a different batch from the batch of the first and second data D1 and D2. Further, the runtime credential of the third data D3 may be "RT0003", and is in an ACTIVE state, whereas the runtime credential of the fourth data D4 may be "RT0004", and is in a REVOKE state. The REVOKE state may mean that the corresponding runtime credential is revoked.

Meanwhile, <B> of FIG. 6 is a diagram explaining registered runtime credentials that are managed by the content server 200. Referring to <B> of FIG. 6, first to fourth registered runtime credentials RC1_r to RC4_r may include the runtime credentials and states. If information D_RC about the runtime credential is received from the authorization server 300, the content server 200 may add the registered runtime credential based on the received information. Further, if information D_RV about the revoked runtime credential is received from the authorization server 300, the content server 200 may change the state of the registered runtime credential based on the received information.

Unlike the authorization server 300, the content server 300 may not store the production credential PC. Accordingly, if a third party transfers the content request signal Rqst to the content server 300 by using the production credential PC, the content server 200 may not provide the sound content Cnt.

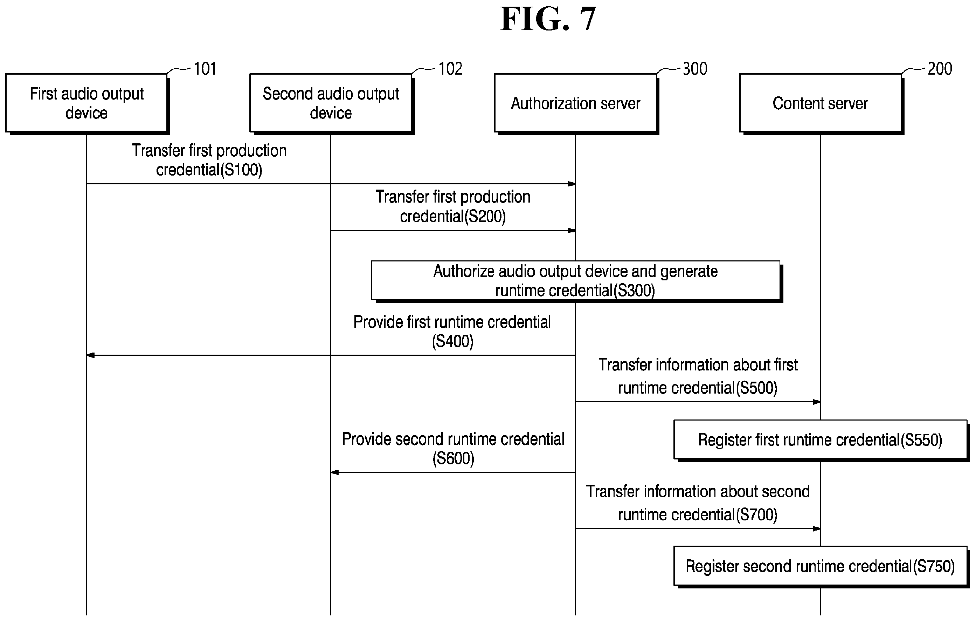

FIG. 7 is a flowchart explaining an authorization method that is performed by an audio providing system according to some embodiments of the present disclosure. Overlapping parts with the above-described contents will be omitted or simplified.

Referring to FIG. 7, a first audio output device 101 transfers a first production credential to the authorization server 300 (S100). Meanwhile, a second audio output device 102 transfers a first production credential to the authorization server 300 (S200).

In this case, the first audio output device 101 and the second audio output device 102 may be devices produced in the same batch. Accordingly, the first and second audio output devices 101 and 102 may have the same first production credential.

Then, the authorization server 300 authorizes the audio output devices, and generates runtime credentials (S300).

The authorization server 300 may authorize the first audio output device 101, and may generate a first runtime credential corresponding to the first audio output device 101. Further, the authorization server 300 may authorize the second audio output device 102, and may generate a second runtime credential corresponding to the second audio output device 102. In this case, the first runtime credential and the second runtime credential may be different from each other.

Then, the authorization server 300 provides the first runtime credential to the first audio output device 101 (S400). Further, the authorization server 300 transfers information about the first runtime credential to the content server 200 (S500). Then, the content server 200 registers the first runtime credential therein (S550).

Then, the authorization server 300 provides the second runtime credential to the second audio output device 102 (S600). Further, the authorization server 300 transfers information about the second runtime credential to the content server 200 (S700). Then, the content server 200 registers the second runtime credential therein (S750).

After the step S750, authorization for the first and second audio output devices and providing of the sound content may be performed in the same manner as the above-described steps S40 to S50 or S60 to S90.

Although it is illustrated that the steps S600 to S750 are performed after the steps S400 to S550 in the drawing, the present disclosure is not limited thereto. The steps S600 to S750 may be performed prior to or in parallel to the steps S400 to S550.

According to the audio providing system and the authorization method thereof according to the present embodiment, a unique runtime credential may be allocated for each audio output device. Through this, in case that a replica is made in the same batch, the use of the replica can be prevented by selectively revoking only the authorization for the replicated device.

Further, in the authorization process according to the present disclosure, the runtime credential is generated, and whether to provide the sound content may be determined by using the runtime credential. Through this, the use of the replica can be minimized by preventing the content from being provided to an unauthorized product.

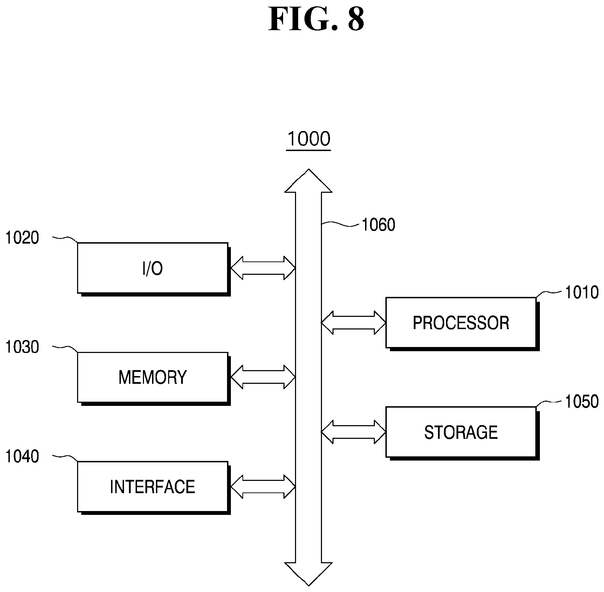

FIG. 8 is a diagram explaining hardware constitutions of an audio providing system, an audio output device, an authorization server, or a content server according to some embodiments of the present disclosure.

Referring to FIG. 8, an audio output device 100, a content server 200, or an authorization server 300 according to some embodiments of the present disclosure may be implemented by an electronic device 1000. The electronic device 1000 may include a processor 1010, an input/output (I/O) device 1020, a memory 1030, an interface 1040, a storage 1050, and a bus 1060. The processor 1010, the input/output (I/O) device 1020, the memory 1030, the interface 1040, and/or the storage 1050 may be connected to one another through the bus 1060. The bus 1060 corresponds to a path through which data moves.

Specifically, the processor 1010 may include at least one of a central processing unit (CPU), a microprocessor unit (MPU), a microcontroller unit (MCU), a graphic processing unit (GPU), a microprocessor, a digital signal processor, a microcontroller, an application processor (AP), and logic elements that can perform functions similar to the functions of the above units and processors.

The input/output device 1020 may include at least one of a keypad, a keyboard, a touchscreen, and a display device.

The memory 1030 may load data and/or programs. In this case, the memory 1030 is an operation memory for improving the operation of the processor 1010, and may include a high speed DRAM and/or SRAM. The memory 1030 may include one or more volatile memory devices, such as a double data rate static DRAM (DDR SDRAM), and a single data rate SDRAM (SDR SDRAM), and/or one or more nonvolatile memory devices, such as an electrical erasable programmable ROM (EEPROM) and a flash memory.

The interface 1040 may perform a function of transmitting data to a communication network or receiving data from the communication network. The interface 1040 may be in a wired or wireless form. For example, the interface 1040 may include an antenna or a wired/wireless transceiver.

The storage 1050 may store and keep data and/or programs. The storage 1050 may include one or more nonvolatile memory devices, such as a solid state drive (SSD), a hard drive, and a flash memory. In the present disclosure, the storage 1050 may store a computer program composed of instructions for performing the authorization method of the audio providing system.

Further, the audio output device 100, the content server 200, and the authorization server 300 according to embodiments of the present disclosure may correspond to a system formed by a plurality of electronic devices 1000 that are connected to each other through the network. In this case, respective modules or module combinations may be implemented by the electronic devices 1000. However, the present embodiment is not limited thereto.

In addition, the content server 200 or the authorization server 300 may be implemented by at least one of a workstation, a data center, an internet data center (IDC), a direct attached storage (DAS) system, a storage area network (SAN) system, a network attached storage (NAS) system, and a redundant array of inexpensive disks or a redundant array of independent disks (RAID) system, but the present embodiment is not limited thereto.

Further, the audio output device 100, the content server 200, and the authorization server 300 may transmit data through a network. The network may include a network by a wired internet technology, a wireless internet technology, and a short-range wireless communication technology. The wired internet technology may include, for example, at least one of a local area network (LAN), and a wide area network (WAN).

The wireless internet technology may include at least one of technologies of a wireless LAN (WLAN), a digital living network alliance (DMNA), a wireless broadband (Wibro), world interoperability for microwave access (Wimax), a high speed downlink packet access (HSDPA), a high speed uplink packet access (HSUPA), IEE 802.16, long term evolution (LTE), long term evolution - advanced (LTE-A), wireless mobile broadband service (WMBS), and 5G new radio (NR). However, the present embodiment is not limited thereto.

The short-range wireless communication technology may include, for example, at least one of Bluetooth, radio frequency identification (RFID), infrared data association (IrDA), ultra-wideband (UWB), ZigBee, near field communication (NFC), ultra sound communication (USC), visible light communication (VLC), Wi-Fi, Wi-Fi Direct, and 5G new radio (NR). However the present embodiment is not limited thereto.

The audio output device 100, the content server 200, and the authorization server 300, which communicate with each other through the network may comply with the technical standards and standard communication methods for mobile communication. For example, the standard communication methods may include at least one of a global system for mobile communication (GSM), code division multiple access (CDMA), code division multiple access 2000 (CDMA2000), enhanced voice-data optimized or enhanced voice-data only (EV-DO), wideband CDMA (WCDMA), high speed downlink packet access (HSDPA), high speed uplink packet access HSUPA), long term evolution (LTE), long term evolution - advanced (LTE-A), and 5G new radio (NR). However, the present embodiment is not limited thereto.

While the inventive concept has been particularly shown and described with reference to exemplary embodiments thereof, it will be understood by those of ordinary skill in the art that various changes in form and details may be made therein without departing from the spirit and scope of the inventive concept as defined by the following claims. It is therefore desired that the embodiments be considered in all respects as illustrative and not restrictive, reference being made to the appended claims rather than the foregoing description to indicate the scope of the disclosure.

## Claims

1. An authorization method performed by an audio providing system including an audio output device, a content server that provides sound content to the audio output device, and an authorization server that performs authorization for the audio output device, the authorization method comprising the steps of:
transferring, by the audio output device, a production credential for a batch of the audio output device to the authorization server;
generating, by the authorization server, a runtime credential corresponding to the audio output device;
providing, by the authorization server, the runtime credential to the audio output device;
transferring, by the authorization server, information about the runtime credential to the content server;
registering, by the content server, the runtime credential that is provided from the authorization server;
transferring, by the audio output device, a content request signal for the sound content to the content server; and
determining, by the content server, whether to provide the sound content to the audio output device by using the content request signal and the registered runtime credential.

2. The authorization method of claim **1,** wherein the step of generating the runtime credential comprises the steps of:
performing the authorization for the audio output device by using the production credential; and
generating the runtime credential corresponding to the audio output device.

3. The authorization method of claim 1, wherein the content request signal comprises the runtime credential.

4. The authorization method of claim 1, wherein the step of determining whether to provide the sound content comprises the steps of:
determining whether the registered runtime credential is identical to the runtime credential included in the content request signal; and
providing the sound content to the audio output device in case that the registered runtime credential is identical to the runtime credential included in the content request signal.

5. The authorization method of claim 4, wherein the step of determining whether to provide the sound content further comprises the step of not providing the sound content to the audio output device in case that the registered runtime credential is not identical to the runtime credential included in the content request signal.

6. The authorization method of claim 1, further comprising the steps of:
revoking, by the authorization server, authorization for the runtime credential;
transferring, by the authorization server, information about the revoked runtime credential to the content server; and
registering, by the content server, the revocation of the runtime credential that is provided from the authorization server.

7. The authorization method of claim 6, wherein the step of determining whether to provide the sound content comprises the steps of:
determining whether the revocation of the runtime credential included in the content request signal has been registered; and
not providing the sound content to the audio output device in case that the revocation of the runtime credential included in the content request signal has been registered.

8. The authorization method of claim 6, wherein the step of determining whether to provide the sound content further comprises the step of:
providing the sound content to the audio output device in case that the revocation of the runtime credential included in the content request signal has not been registered.

9. An authorization method performed by an audio providing system including a first audio output device, a second audio output device, a content server that provides sound content to the first and second audio output devices, and an authorization server that performs authorization for the first and second audio output devices, the authorization method comprising the steps of:
transferring, by the first audio output device, a first production credential for a batch of the first audio output device to the authorization server;
transferring, by the second audio output device, a first production credential for a batch of the second audio output device to the authorization server;
generating, by the authorization server, a first runtime credential corresponding to the first audio output device;
generating, by the authorization server, a second runtime credential corresponding to the second audio output device and being different from the first runtime credential;
determining, by the content server, whether to provide the sound content to the first audio output device in accordance with a state of the first runtime credential; and
determining, by the content server, whether to provide the sound content to the second audio output device in accordance with a state of the second runtime credential.

10. The authorization method of claim 9, wherein the step of generating the first runtime credential comprises:
generating the first runtime credential corresponding to the first audio output device;
providing the first runtime credential to the first audio output device; and
transferring and registering information about the first runtime credential onto the content server.

11. The authorization method of claim 10, wherein the step of determining whether to provide the sound content to the first audio output device comprises the steps of:
receiving a content request signal for the sound content from the first audio output device;
determining whether the registered first runtime credential is identical to the first runtime credential included in the content request signal; and
providing the sound content to the first audio output device in case that the registered first runtime credential is identical to the first runtime credential included in the content request signal.

12. The authorization method of claim 9, further comprising the steps of:
revoking, by the authorization server, authorization for the first runtime credential;
transferring, by the authorization server, information about the revoked first runtime credential to the content server; and
registering, by the content server, the revocation of the first runtime credential that is provided from the authorization server.

13. The authorization method of claim 12, wherein the step of determining whether to provide the sound content to the first audio output device comprises:
receiving a content request signal for the sound content from the first audio output device;
determining whether the revocation of the first runtime credential has been registered; and
not providing the sound content to the first audio output device in case that the revocation of the first runtime credential included has been registered.

14. An audio providing system comprising:
an audio output device including a production credential for a batch;
a content server configured to provide sound content to the audio output device; and
an authorization server configured to perform authorization for the audio output device,
wherein the authorization server is configured to:
receive the production credential from the audio output device and generating a runtime credential corresponding to the audio output device,
provide the runtime credential to the audio output device, and
transfer information about the runtime credential to the content server, and
wherein the content server is configured to:
register the runtime credential that is provided from the authorization server,
receive a content request signal for the sound content from the audio output device, and
determine whether to provide the sound content to the audio output device by using the content request signal and the runtime credential.

15. The audio providing system of claim 14, wherein the determining of whether to provide the sound content comprises:
determining whether the registered runtime credential is identical to the runtime credential included in the content request signal; and
providing the sound content to the audio output device in case that the registered runtime credential is identical to the runtime credential included in the content request signal.

16. The audio providing system of claim 14, wherein the authentication server is configured to:
revoke authorization for the runtime credential,
further transfer information about the revoked runtime credential to the content server, and
further register the revocation of the runtime credential that is provided from the authorization server.

17. The audio providing system of claim 16, wherein the determining of whether to provide the sound content comprises:
determining whether the revocation of the runtime credential included in the content request signal has been registered; and
not providing the sound content to the audio output device in case that the revocation of the runtime credential included in the content request signal has been registered.
